# EUROPÄISCHE PATENTSCHRIFT

(11) **EP 4 051 423 B1**
(45) Veröffentlichungstag und Bekanntmachung des Hinweises auf die Patenterteilung: **01.04.2026**
(21) Anmeldenummer: 20824889.8
(22) Anmeldetag: 30.10.2020
(51) Int. Cl.: B01J 2/16, B01J 8/36, C05C 1/02, C05C 5/00, C05C 9/00

(54) **FLIESSBETTGRANULATOR**
FLUID BED GRANULATOR
GRANULATEUR DE LIT FLUIDISÉ

(30) Priorität: 31.10.2019 DE 102019216894
(43) Veröffentlichungstag der Anmeldung: 07.09.2022
(73) Patentinhaber: thyssenkrupp Uhde Fertilizer Technology GmbH, 44141 Dortmund (DE); thyssenkrupp AG, 45143 Essen (DE)
(72) Erfinder: POTTHOFF, Matthias, 44265 Dortmund (DE); FRANZRAHE, Harald, 44289 Dortmund (DE)
(74) Vertreter: thyssenkrupp Intellectual Property GmbH
(86) Internationale Anmeldenummer: PCT/EP2020/000185
(87) Internationale Veröffentlichungsnummer: WO 2021/083541

(56) Entgegenhaltungen:
- DE-A1- 4 316 320
- US-A- 4 237 814
- US-A- 5 695 701
- US-B1- 7 128 936

## Beschreibung

Die Erfindung betrifft einen Fließbettgranulator zur Herstellung harnstoffhaltiger Granulate, eine Granulationsanlage mit einem solchen Fließbettgranulator, ein Verfahren zur Herstellung eines harnstoffhaltigen Granulates und die Verwendung des erfindungsgemäßen Fließbettgranulators zur Herstellung eines harnstoffhaltigen Granulates.

Im Hinblick auf das weltweite Bevölkerungswachstum kommt der Entwicklung von flexiblen und effizienten Düngern eine große und wachsende Bedeutung zu. Dabei spielt nicht nur der Dünger selbst, d.h. die chemische Zusammensetzung, sondern auch die Verarbeitungen in transportfähige Gebinde und die Ausbringung auf das Feld eine Rolle. Die größte Bedeutung kommt hierbei sicherlich der Granulierung zu gleichmäßigen, in Größe und Beschaffenheit gleichen Partikeln, zu. Wichtige Parameter sind hierbei geringe Staubbildung, Festigkeit, niedrige Aggregationstendenz, homogene Größe, Lagerfähigkeit und Beständigkeit. Eine etablierte Granulationstechnik ist die Fließbettgranulation, welche gegenüber beispielsweise den Prill- und Pastilliertechniken, verbesserte Partikeleigenschaften aufweist.

Ein Beispiel zur Herstellung eines harnstoffhaltigen Düngergranulates mittels FließbettGranulation findet sich in der WO 2010/060535 A1, z.B. in den Paragraphen [0025]-[0035], Figur 1 oder der US 4,701,353 A, DE 31 16 778 A1 und US 4,219,589 A.

Ein sehr großer Anteil an der weltweiten Düngerproduktion entfällt auf harnstoffhaltige Dünger. Dieser wasserlösliche Dünger zerfällt im Boden zu Ammoniumsalzen bzw. Nitraten und stellt einen wichtigen Basisdünger dar. Dieser harnstoffhaltige Dünger kann mit weiteren Elementen wie Kalium, Phosphaten oder Schwefelverbindungen kombiniert werden.

Der Einsatz von Harnstoff-Schwefel Dünger in der Landwirtschaft ist schon seit längerer Zeit bekannt. In derartigen Düngermischungen können der Pflanze beide Elemente Stickstoff und Schwefel gleichzeitig bereitgestellt werden, so dass Schritte und Kosten zur Ausbringung eines weiteren Düngers eingespart werden können. In Kombination mit Harnstoff ermöglicht dies beispielsweise eine Versorgung der ausgesäten Pflanzen im frühen Stadium mit Stickstoff über den Harnstoff und mit Schwefel in den anschließenden Wachstumsphasen.

Aus diesem Grund kommen Harnstoff-Schwefeldüngern mit einer homogenen Verteilung von Harnstoff und Schwefel eine zunehmend größere Bedeutung zu. Beispiele finden sich z.B. in der US 4,330,319 A.

Moderne Granulationsanlagen für harnstoffhaltige Düngergranulate ermöglichen Produktionsmengen im Bereich von 2000 t (Tonnen) bis 4000 t (Tonnen) pro Tag. Diese Produktionsmengen bedingen gleichzeitig auch eine entsprechende Dimensionierung des Fließbettgranulators. In einem beispielhaften Fließbettgranulator befindet sich der Granulataustrag an der einen Schmalseite des Fließbettgranulators und der Granulat-/Saatguteintritt an der gegenüberliegenden Seite des Fließbettgranulators. Dies stellt bei kleinen Fließbettgranulatoren (bis ca. 30 m²) bei der technischen Umsetzung im Regelfall auch kein Problem dar.

Zum Weitertransport des Granulats in den Sieb-/Malkreislauf ist am Fließbettgranulatoraustritt zunächst häufig ein Grobsieb zur Abtrennung großer Agglomerate oder übergroßer Partikel und dann mindestens ein Becherwerk angeordnet, welches das Granulat im Granulationsgebäude nach oben zu den Sieben fördert. Von diesem höchsten Punkt in der Granulationsanlage gelangt der Feststoff dann vorzugsweise ausschließlich aufgrund der Schwerkraft zu allen weiteren Prozessschritten und Apparaten der Granulationsanlage. Von den Sieben gelangen beispielsweise ca. 30% des Granulats über geneigte Schurren als Saatgut/Rücklauf zurück zur Eintrittsseite des Fließbettgranulators. Die Eintrittsseite liegt der Austrittsseite gegenüber, beide bilden jeweils eine Schmalseite des Fließbettgranulators. Die Neigung dieser Schurren ist so gewählt, dass einerseits das Produkt frei fließt, andererseits aber nicht ins Fallen gerät, um einen gleichmäßigen Produktfluss sicherzustellen. Dies führt dazu, dass durch die externe Überbrückung einer horizontalen Entfernung zwischen der Granulataustragsseite und der Saatguteintrittsseite auch die Höhe des Gebäudes beispielsweise mit dem Faktor 1.2 bis 1.7 zunimmt. Dadurch wird nicht nur das das Granulat nach oben fördernde Becherwerk, sondern auch das ganze Gebäude entsprechend höher und es entsteht viel ungenutztes Gebäudevolumen. Somit wird mit der bisherigen Ausführung mit zunehmender Fließbettgranulatorlänge das Gebäude, in dem der Fließbettgranulator untergebracht ist, immer höher.

US 5 695 701 A offenbart einen Fließbettgranulator für eine Umbenetzungsagglomeration, bei welcher die eingebrachten Teilchen befeuchtet werden, um bei Stößen im Fließbett aneinanderzuhaften. Das für die Umbenetzung erforderliche befeuchtende Medium wird über ein längszentral angeordnetes Rohr mit Zerstäuberdüsen eingebracht, so dass die Partikel im Fließbett mit der befeuchtenden Flüssigkeit homogen benetzt werden.

Aus US 7 128 936 B1 ist für die Umbenetzungsagglomeration auch die Verwendung von kombinierten Fließbetttrocknern und Fließbettkühlern bekannt, wobei das Ausgangsmaterial zur Granulierung auf die Mantelfläche eines rotierenden Stahlzylinders aufgesprüht wird, von welcher das agglomerierte Pulver abgeschleudert wird, während es mit Heißluft getrocknet wird. Hinter dem Granulator wird das heiße agglomerierte Pulver in einem Fließbett zunächst mit Hilfe von Heißluft weiter getrocknet und anschließend mittels Kühlluft abgekühlt.

In DE 43 16 320 A1 ist eine Vorrichtung zum Dehydratisieren von Natriumperborat-Tetrahydrat in einer Wirbelschicht beschrieben. Der Innenraum des Wirbelschichtfließbetttrockners ist durch Wehre in vier Zonen mit unterschiedlicher Lufttemperatur unterteilt: wobei in den mittleren beiden Zonen parallel zur Förderrichtung ausgerichtete plattenförmige Kontaktflächen als Wärmetauscher vorgesehen sind, welche einen Teil der für die Dehydratisierung erforderlichen Wärmeenergie einbringen, so dass sich Temperatur und Menge der zur Fluidisierung zugeführten Luft sowie die Abluftverluste reduzieren lassen.

EP 2 832 439 A1 offenbart einen beschichteten Fließbettgranulator und den beispielhaften Aufbau.

EP 1 581 333 B1 offenbart einen Fließbettgranulator in kompakter Bauweise für die Granulierung nitrathaltiger Partikel.

EP 0 900 589 A1 offenbart einen energiesparenden Fließbettgranulator und ein Verfahren, wobei auf das Recyceln von Produktpartikeln verzichtet werden kann.

Die vorliegende Erfindung hat die Aufgabe, einen Fließbettgranulator bereitzustellen, welcher die voranstehend beschriebenen Nachteile des Stands der Technik nicht aufweist. Das Granulationsgebäude soll auch bei hohen Produktionsmengen von harnstoffhaltigem Granulat und damit sehr langen Fließbettgranulatoren eine möglichst kompakte Bauweise mit wenig ungenutzten Räumen aufweisen.

Die Aufgabe der Erfindung wird durch einen Fließbettgranulator zur Herstellung harnstoffhaltiger oder nitrathaltiger Granulate gemäß Anspruch 1 gelöst. Vorteilhafte Ausgestaltungen ergeben sich aus den abhängigen Ansprüchen.

Die Aufgabe wird weiterhin durch eine Granulationsanlage gemäß Anspruch 19 sowie ein Verfahren zur Herstellung eines harnstoffhaltigen Granulates gemäß Anspruch 23 gelöst. Vorteilhafte Ausgestaltungen ergeben sich aus den abhängigen Ansprüchen.

Weiterhin umfasst die Erfindung die Verwendung des erfindungsgemäßen Fließbettgranulators zur Herstellung eines harnstoffhaltigen Granulates.

Der erfindungsgemäße Fließbettgranulator zur Herstellung harnstoffhaltiger oder nitrathaltiger Granulate umfasst mindestens:
- einen Granulatorinnenraum mit Granulatorinnenraumwänden, mindestens umfassend eine erste Granulatorseitenwand, eine zweite Granulatorseitenwand, eine in Querrichtung zu den Granulatorseitenwänden verlaufende Granulatorvorderwand und eine ebenfalls in Querrichtung verlaufende Granulatorrückwand an dem der Granulatorvorderwand gegenüberliegenden Ende des Granulatorinnenraums;
- eine den Granulatorinnenraum nach unten hin begrenzende horizontal angeordnete perforierte Platte;
- mindestens eine Saatguteingangsöffnung und mindestens eine Granulatausgangsöffnung;
- wobei die mindestens eine Granulatausgangsöffnung mit Abstand vor der Granulatorrückwand angeordnet ist.

Gemäß der vorliegenden Erfindung ist im Granulatorinnerraum wenigstens eine Umlenkeinrichtung vorgesehen, die eine Strömungsumlenkung des Granulats im Granulatorinnenraum in der Weise bewirkt, dass die Granulatpartikel wenigstens einfach in einer Richtung abweichend von ihrer anfänglichen Fließrichtung zur Granulatausgangsöffnung hin umgelenkt werden. Dabei umfasst die Umlenkeinrichtung weiterhin wenigstens zwei Umlenkplatten, von denen sich eine erste Umlenkplatte gegebenenfalls mit Abstand neben der Granulatausgangsöffnung etwa in Fließrichtung der Granulatpartikel erstreckt und eine zweite Umlenkplatte, die sich vor der Granulatausgangsöffnung etwa quer zur Fließrichtung der Granulatpartikel erstreckt.

Dabei kann die Granulatausgangsöffnung an zwei oder drei Seiten von Umlenkplatten umgeben sein, wobei gegenüber der Granulatorrückwand keine Umlenkplatte oder eine Umlenkplatte mit einer Öffnung angeordnet ist.

Gemäß einer bevorzugten Weiterbildung der vorliegenden Erfindung ist die mindestens eine Granulatausgangsöffnung innerhalb der perforierten Platte angeordnet.

Gemäß einer bevorzugten Weiterbildung der vorliegenden Erfindung ist im Granulatorinnenraum wenigstens eine Umlenkeinrichtung vorgesehen, die eine mehrfache Strömungsumlenkung der Granulatpartikel im Granulatorinnenraum abweichend von ihrer anfänglichen Fließrichtung zur Granulatausgangsöffnung hin bewirkt.

Gemäß einer bevorzugten Weiterbildung der vorliegenden Erfindung ist im Granulatorinnenraum wenigstens eine Umlenkeinrichtung vorgesehen, die eine Strömungsumlenkung der Granulatpartikel im Granulatorinnenraum um insgesamt etwa 180 ° abweichend von ihrer anfänglichen Fließrichtung zur Granulatausgangsöffnung hin bewirkt.

Gemäß einer bevorzugten Weiterbildung der vorliegenden Erfindung umfasst die Umlenkeinrichtung wenigstens eine Umlenkplatte, die sich etwa in Fließrichtung der Granulatpartikel oder in einem spitzen Winkel zur Fließrichtung der Granulatpartikel erstreckt und mit Abstand zu den Granulatorseitenwänden angeordnet ist.

Gemäß einer bevorzugten Weiterbildung der vorliegenden Erfindung umfasst die Umlenkeinrichtung wenigstens zwei Umlenkplatten, die miteinander einen spitzen Winkel oder einen rechten Winkel einnehmen oder zueinander parallel angeordnet sind.

Anstelle von einzelnen Umlenkplatten, die zueinander einen spitzen Winkel oder einen rechten Winkel einnehmen und so die Granulatausgangsöffnung zunächst gegen in der ursprünglichen Fließrichtung strömende Granulatpartikel abschirmen und die Umlenkung bewirken, kann man beispielsweise auch eine bogenförmig ausgebildete Umlenkplatte vorsehen, die so geformt ist, dass sie die Granulatausgangsöffnung an einer, zwei oder drei Seiten abschirmt, die aber zumindest an der der Granulatorrückwand zugewandten Seite eine Öffnung aufweist, so dass umgelenkte Granulatpartikel von dort aus in die Granulatausgangsöffnung geleitet werden.

Der erfindungsgemäße Fließbettgranulator umfasst mindestens einen Granulatorinnenraum mit Granulatorinnenraumwänden. Die Granulatorinnenraumwände umfassen mindestens eine erste Granulatorseitenwand (bevorzugt als lange Seite des Fließbettgranulators), eine zweite Granulatorseitenwand (bevorzugt als lange Seite des Fließbettgranulators), eine Granulatorvorderwand (bevorzugt als kurze Seite bzw. Schmalseite) und eine Granulatorrückwand (bevorzugt als kurze Seite bzw. Schmalseite). Innerhalb des Granulatorinnenraums, bevorzugt horizontal oberhalb des Innenraumbodens, ist eine perforierte Platte angeordnet. Bevorzugt sind in, oberhalb oder auf der perforierten Platte angeordnete Sprühdüsen angebracht. Alternativ können die Sprühdüsen auch getrennt von der perforierten Platte, beispielsweise oberhalb der perforierten Platte oder seitlich im Granulatorraum (beispielsweise an den Granulatorseitenwänden), angeordnet sein. Die Sprühdüsen sind bevorzugt mit Atomisierungsgaszuleitungen und Schmelzezuführungsleitungen für die Zuführung der harnstoffhaltigen Düngermittelschmelze verbunden. Der Ausdruck "harnstoffhaltige Düngermittelschmelze" umfasst im Sinne der Erfindung auch (im Rahmen der technischen Reinheit und mit einem Wasseranteil von in der Regel 1 Gew. % bis 10 Gew. %) reine Harnstoffschmelzen oder Harnstofflösungen bzw. reine Harnstoffschmelzen oder Harnstofflösungen mit einem Granulierungsadditiv wie beispielsweise Formaldehyd, Polyvinylamine, Polyethylenvinyle (z.B. Polyethylenamin), Polyethylenimine, Carbonsäuren und/oder Aldehyde. Optional können die Atomisierungsgaszuleitungen und Schmelzezuführungsleitungen auch in einer Kombileitung realisiert werden. Der Ausdruck "Atomisierungsgaszuleitung" umfasst im Sinne der Erfindung Gaszuleitungen, welche zusammen mit der zu granulierenden Schmelze aus den Schmelzezuführungsleitungen in den Sprühdüsen fein verteilte Schmelzetröpfchen ("atomisierte" Tröpfchen) erzeugen. Der Ausdruck "Atomisierung" meint im Sinne der Erfindung nicht der Zerlegung oder Zersetzung der Schmelzetröpfchen in einzelne Atome, sondern vielmehr die Erzeugung von kleinen Schmelzetröpfchen, bevorzugt im Bereich von 1 bis 200 µm. Der Ausdruck "Schmelze" umfasst im Sinne der Erfindung konzentrierte Lösungen, Suspensionen, Emulsionen oder Dispersionen, bevorzugt mit einem Anteil der in der harnstoffhaltigen Schmelze zu lösenden Komponente von größer 0,5 Gew. %, bis 50 Gew. %, besonders bevorzugt kleiner 30 Gew. %. Weiterhin sind eine oder mehrere Saatguteingangsöffnungen und eine oder mehrere Granulatausgangsöffnungen umfasst, wobei die Strecke zwischen der/den Saatguteingangsöffnung/-en und der/den Granulatausgangsöffnung/-en eine (gedachte) Granulat-Fließrichtung definiert. Der Ausdruck "Saatguteingangsöffnung" beschreib eine oder mehrere Öffnungen bzw. Zuführungen über die kleinere (kleiner als die gewünschte Granulatgröße) Partikel als Saatgutpartikel in den Fließbettgranulator eingeführt werden. Über die Sprühdüsen werden die Saatgutpartikel mit Schmelzetröpfchen beaufschlagt. Durch diese Beaufschlagung "accretion" wachsen die Saatgutpartikel kontinuierlich an. Bevorzugt erscheinen die Partikel auf mikroskopischer Ebene durch das Anwachsen "himbeerartig" bestehend aus einem Kern mit aufgeschmolzenen, erstarrten (kristallisierten) Tropfen.

Der erfindungsgemäße Fließbettgranulator ist dadurch gekennzeichnet, dass die Granulatausgangsöffnung beabstandet zur und vor der Granulatorrückwand angeordnet ist. Dadurch wird das Granulat nicht wie bei einem herkömmlichen Fließbettgranulator am bezogen auf die Saatguteingangsöffnung am weitesten entfernten Ende des Granulatorinnenraums ausgetragen, sondern es wird durch eine geeignete Umlenkeinrichtung in eine Richtung abweichend von der Hauptfließrichtung umgelenkt und der Granulatausgangsöffnung in einem Bereich zugeführt, welcher in Fließrichtung gesehen mit Abstand vor der Granulatorrückwand liegt.

Weiterhin ist die Granulatausgangsöffnung innerhalb der perforierten Platte angeordnet. Die Granulatausgangsöffnung ist in der erfindungsgemäßen Ausgestaltung beispielsweise von Umlenkplatten, bevorzugt u-förmig, umgeben, wobei gegenüber der Granulatorrückwand keine Umlenkplatte oder eine Umlenkplatte mit einer Öffnung vorgesehen ist. Die Umlenkplatten bewirken dabei ein Umfließen mit anschließendem Umlenken der im Fließbett befindlichen Granulatpartikel zuerst an der Granulatausgangsöffnung vorbei und anschließend mit umgekehrter Fließrichtung innerhalb der Umlenkplatten in die Granulatausgangsöffnung. Damit kann der Granulataustrag innerhalb des Granulatorinnenraums angeordnet werden. Damit reduziert sich überraschend der Abstand zwischen Granulataustrag (Granulatausgangsöffnung) und Rücklauf-/Saatguteintritt (Saatguteingangsöffnung) des Fließbettgranulators um ca. 20 - 50%. Durch den verlagerten Granulataustrag verringert sich die erforderliche Höhe des Becherwerks sowie die Gebäudehöhe des Granulationsgebäudes entsprechend.

Bevorzugt beinhaltet der Granulatorinnenraum eine Fluidisierungsgaszuleitung, sowie in oder auf der perforierten Platte angeordnete Sprühdüsen mit Zuleitungen für Schmelze und Zuleitungen für Atomisierungsgas. Die Zuleitungen für Schmelze und Zuleitungen für Atomisierungsgas können über einzelne oder zusammengefasste Zuleitungen erfolgen. Die Fluidisierungsgaszuleitung ermöglicht das Einbringen eines Luft- oder Gasstromes, welcher von unten durch die perforierte Platte ein Fließbett aus Granulatpartikeln oberhalb der perforierten Platte erzeugt.

Bevorzugt umfasst der Granulatorinnenraum oberhalb der perforierten Platte Wachstumszonen und Kühlzonen. Bevorzugt sind in den Wachstumszonen wie voranstehend beschrieben Sprühdüsen in den perforierten Platten angeordnet, in den Kühlzonen fehlen Sprühdüsen oder es sind gegebenenfalls weniger Sprühdüsen als in den Wachstumszonen vorhanden. Der Wechsel von Wachstumszonen und Kühlzonen ermöglicht eine Steuerung des Partikelwachstums und der Temperaturverteilung. Dies ist insbesondere zur Vermeidung von Biuret bei hohen Temperaturen nützlich.

In einer bevorzugten Ausgestaltung sind zwei Saatguteingangsöffnungen im Bereich der Granulatorvorderwand angeordnet. Zusätzlich können, abhängig von der Größe des Fließbettgranulators, weitere Saatguteingangsöffnungen an der ersten und der zweiten Granulatorseitenwand angeordnet sein. Im Rahmen der Erfindung sind optional auch weitere Saatguteingangsöffnungen an anderen Stellen möglich. Besonders bevorzugt sind eine dritte und eine vierte Saatguteingangsöffnung in Verbindung mit einer Wachstumszone angeordnet.

Die zusätzlichen Saatguteingangsöffnungen ermöglichen eine Steuerung und zusätzliche Temperaturkontrolle des Wachstumsprozesses der Granulatpartikel.

Bevorzugt ist die Granulatausgangsöffnung innerhalb der perforierten Platte angeordnet und berührt die Granulatorrückwand nicht.

In einer weiteren bevorzugten Ausgestaltung sind die Umlenkplatten (8.1, 8.1+i mit i = 0, 1, 2, 3, ...) U-förmig oder ummantelnd um die Granulatausgangsöffnung angeordnet. Der Ausdruck "U-förmig oder ummantelnd" umfasst auch eine runde, abgerundete, gerade, eckige Anordnung der Umlenkplatten. Beispielhafte Geometrien umfassen eine rechteckige oder quadratische Anordnung in welcher die Seite, welche der Granulatorrückwand gegenüber liegt, fehlt oder eine Öffnung zum Durchlass des Granulates aufweist.

Weiterhin bevorzugt sind zwischen den Wachstumszonen und Kühlzonen Trennwände angeordnet, bevorzugt umfassen die Trennwände Durchlassöffnungen. Besonders bevorzugt sind die Durchlassöffnungen im unteren Bereich benachbart oder anschließend an die perforierte Platte angeordnet.

In einer weiteren bevorzugten Ausgestaltung ist die Umlenkplatte als ein Teil einer Trennwand ausgeführt. Diese Ausgestaltung umfasst auch einen Abschnitt der Trennwand, welcher keine Durchlassöffnung für die Granulatpartikel aufweist.

Weiterhin bevorzugt ist die Granulatausgangsöffnung innerhalb einer Kühlzone angeordnet. Ferner umfasst die Erfindung eine Granulationsanlage, in der die Granulatausgangsöffnung des Fließbettgranulators über ein Grobsieb zur Abtrennung grober Brocken und übergroßer Granulatagglomerate mit einer Fördereinrichtung, beispielsweise einem oder zwei nachgeschalteten Becherwerk/-en oder anderen Förderorganen, verbunden ist. Der Ausdruck "verbunden" schließt im Sinne der Erfindung weitere zwischengelagerte Bauteile wie beispielsweise Fließbettkühler mit ein. Die Fördereinrichtung ermöglicht den Weitertransport des gekühlten Granulats im Granulationsgebäude nach oben zu einer bevorzugt dort angeordneten Siebvorrichtung. Die Siebvorrichtung ermöglicht eine Trennung der Granulatpartikel in Granulatpartikel im bevorzugten Größenbereich (z.B. häufig 2 mm bis 4 mm für harnstoffhaltige Partikel), Teilchen kleiner als der bevorzugte Größenbereich und Teilchen größer als der bevorzugte Größenbereich. Bevorzugt werden die Teilchen größer als der bevorzugte Größenbereich in einem Brecher oder Mahlwerk zerkleinert und zusammen mit den Teilchen kleiner als der bevorzugte Größenbereich als Saatgutpartikel über die Saatguteingangsöffnung(-en) in den Granulatorinnenraum zurückgeführt. Die Rückführung der Saatgutpartikel erfolgt bevorzugt alleine durch die Schwerkraft, um den apparativen Aufwand für den Saatgutpartikel-Transport zu minimieren. Dazu werden beispielsweise Schurren eingesetzt, deren Neigungswinkel größer als der Schüttwinkel des Granulats sind. Diese Anordnung bestimmt im Wesentlichen die Höhe des Granulationsgebäudes.

In einer bevorzugten Ausgestaltung ist die Fördereinrichtung in Granulatfließrichtung gesehen in einem Abstand von 20 bis 80 % der Gesamtlänge der ersten oder zweiten Granulatorseitenwand zur Außenkante der ersten oder zweiten Granulatorseitenwand angeordnet. Die erfindungsgemäße Ausgestaltung der Granulationsanlage ermöglicht eine bezogen auf die Längsseite des Fließbettgranulators mittige Anordnung der Fördereinrichtung. Der Ausdruck "in einem Abstand von 20 bis 80 % der Gesamtlänge der ersten oder zweiten Granulatorseitenwand zur Außenkante der ersten oder zweiten Granulatorseitenwand angeordnet" bedeutet im Sinne der Erfindung, dass die Fördereinrichtung von der Granulatorvorderwand in einem Abstand von 20 % bis 80 % der Gesamtlänge der ersten oder zweiten Granulatorseitenwand angeordnet ist. Bei einer beispielhaften Seitenlänge der ersten oder zweiten Granulatorseitenwand von 20 m ist die Fördereinrichtung in einem Abstand zur Granulatorvorderwand von 4 m (20%) bis 16 m (80 %) außerhalb des Granulatorinnenraums neben der ersten oder zweiten Granulatorseitenwand angeordnet. Durch die zentralere Anordnung der Fördereinrichtung und der nachgelagerten Siebvorrichtung kann die gesamte Gebäudehöhe des Granulationsgebäudes reduziert werden, da sich die mit Hilfe der geneigten Schurren zu überwindende Strecke von der Fördereinrichtung zur Saatguteingangsöffnung reduziert. Der Ausdruck "angeordnet" bezieht sich auf den Bodenflächenmittelpunkt der Fördereinrichtung.

In einer alternativen Ausgestaltung ist die Granulatausgangsöffnung, bevorzugt durch ein Grobsieb zur Abtrennung grober Brocken und übergroßer Granulatagglomerate, entweder mit einem separaten Fließbettkühler verbunden oder die Granulatausgangsöffnung ist mit keinem separaten Fließbettkühler verbunden. Besonders bevorzugt ist die Granulatausgangsöffnung mit keinem separaten Fließbettkühler verbunden. In dieser Ausgestaltung sind Fließbettgranulator und Fließbettkühler in dem erfindungsgemäßen Fließbettgranulator vereinigt.

Bevorzugt weist die perforierte Platte des Fließbettgranulators geneigte Öffnungen auf, besonders bevorzugt weisen die geneigten Öffnungen einen Winkel von 20 ° bis 60 ° zur Oberfläche der perforierten Platte auf. Der Ausdruck "geneigte Öffnungen" umfasst im Sinne der Erfindung auf der perforierten Platte angeordnete Öffnungen, Ausstanzungen, Aushöhlungen, Erhebungen, Einkerbungen und ähnliche auf der perforierten Platte angebrachte, angeordnete oder durch Verformung der perforierten Platte erhaltene Elemente, welche eine Umlenkung des Luftstroms abweichend von der vertikalen Ausbreitung durch eine einfache, plane, ggf. ringförmige, Öffnung, erlauben. Die geneigten Öffnungen weisen bevorzugt einen maximalen Durchmesser von 1 mm bis 3 mm auf.

Weiterhin bevorzugt sind die geneigten Öffnungen in unterschiedliche Richtungen geneigt, besonders bevorzugt entlang einer Granulat-Fließrichtung, insbesondere besonders bevorzugt entlang der Granulat-Fließrichtung um die Umlenkplatten in Richtung der Granulatausgangsöffnung. Die Anordnung unterschiedlich geneigter Öffnungen unterstützt die Führung der Granulatpartikel durch den Fließbettgranulator und entlang der Umlenkplatten in die Granulatausgangsöffnung.

Die Erfindung umfasst des Weiteren ein Verfahren zur Herstellung eines harnstoffhaltigen oder nitrathaltigen Granulates mindestens umfassend die folgenden Schritte. In einem ersten Schritt wird eine harnstoffhaltige und/oder nitrathaltige Schmelze, beziehungsweise eine konzentrierte harnstoffhaltige Lösung bereitgestellt. Bevorzugt enthält die Schmelze noch einen Gewichtsanteil von 1 bis 5 Gew. % Wasser, besonders bevorzugt umfassen die restlichen Gewichtsanteile Harnstoff, elementarer Schwefel, Granulierungsadditive, Emulgierungsadditive und/oder Ammoniumsulfat. In einem folgenden Schritt erfolgt das Einsprühen der harnstoffhaltigen Schmelze in einen wie voranstehend beschriebenen und mit fluidisierten Granulatpartikeln gefüllten Fließbettgranulator. In einem weiteren Schritt erfolgen das Granulieren der harnstoffhaltigen und/oder nitrathaltige Schmelze und das Erhalten eines harnstoffhaltigen oder nitrathaltigen Granulates. Durch den Niederschlag der Schmelzetropfen auf den fluidisierten Partikeln erstarrt die Schmelze auf der Oberfläche der Partikel und man erhält ein harnstoffhaltiges oder nitrathaltiges Granulat.

Bevorzugt enthält die im erfindungsgemäßen Verfahren eingesetzte harnstoffhaltige Schmelze Ammoniumsulfat, elementaren Schwefel, Ammoniumnitrat, Spurenelemente, Granulierungsadditive, Emulgierungsadditive und oder Gemische davon. Besonders bevorzugt enthält die harnstoffhaltige Schmelze 2 Gew.% bis 30 Gew.% Schwefel, insbesondere bevorzugt 5 Gew.% bis 20 Gew.% Schwefel. Der Ausdruck "harnstoffhaltige Düngermittelschmelze" umfasst im Sinne der Erfindung auch (im Rahmen der technischen Reinheit und mit einem Wasseranteil von in der Regel 2 Gew. % bis 10 Gew. %) reine Harnstoffschmelzen oder Harnstofflösungen, bzw. reine Harnstoffschmelzen oder Harnstofflösungen mit einem Granulierungsadditiv wie beispielsweise Formaldehyd, Polyvinylamine, Polyethylenvinyle (z.B. Polyethylenamin), Polyethylenimine, Carbonsäuren und/oder Aldehyde.

Die Erfindung umfasst des Weiteren die Verwendung eines wie voranstehend beschriebenen erfindungsgemäßen Fließbettgranulators zur Herstellung eines harnstoffhaltigen Granulates, besonders bevorzugt eines elementaren Schwefel und/oder Ammoniumsulfat enthaltenden harnstoffhaltigen Granulates.

Die Erfindung wird im Folgenden anhand von Figuren näher beschrieben. Die Figuren sind nicht maßstabsgetreu und schränken die Erfindung nicht auf die dort gezeigten Ausführungen ein.

Es zeigen:
Figur 1 eine schematische Draufsicht eines Fließbettgranulators gemäß dem Stand der Technik;
Figur 2 eine schematische Draufsicht eines beispielhaften erfindungsgemäßen Fließbettgranulators;
Figur 3 eine weitere schematische Draufsicht des erfindungsgemäßen Fließbettgranulators;
Figur 4 eine weitere schematische Draufsicht einer alternativen Ausgestaltung des erfindungsgemäßen Fließbettgranulators;
Figur 5 eine weitere bevorzugte schematische Draufsicht des erfindungsgemäßen Fließbettgranulators;
Figur 6 eine schematisch vereinfachte Seitenansicht eines Fließbettgranulators gemäß dem Stand der Technik;
Figur 7 eine entsprechende schematisch vereinfachte Seitenansicht eines erfindungsgemäßen Fließbettgranulators.

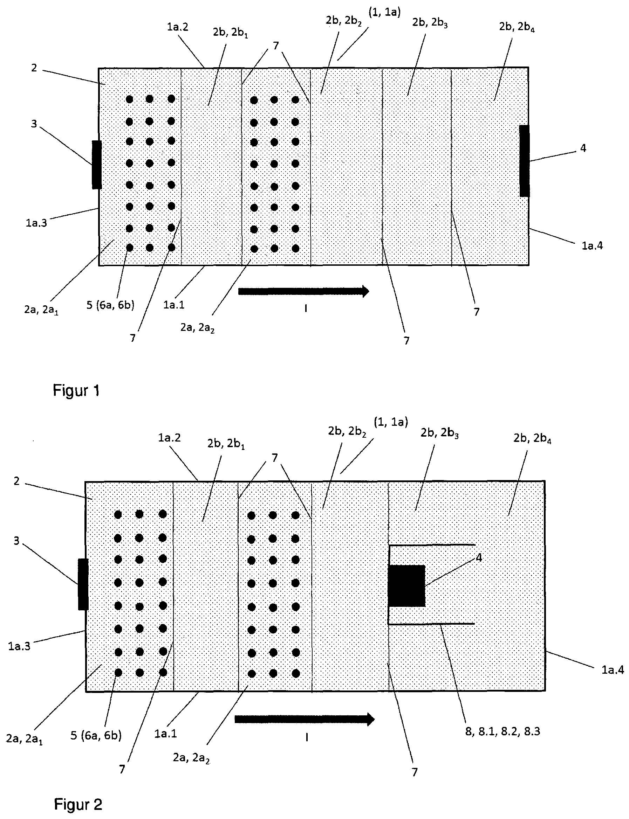

Figur 1 zeigt eine schematische Draufsicht eines herkömmlichen Fließbettgranulators gemäß dem Stand der Technik umfassend mindestens einen Granulatorinnenraum 1 mit diesen Granulatorinnenraum begrenzenden Granulatorinnenraumwänden 1a. Die Granulatorinnenraumwände 1a umfassen mindestens eine erste etwa vertikale bevorzugt nach oben leicht weg von der Mittellinie des Fließbettgranulators nach außen hin geneigte Granulatorseitenwand 1a.1, die den Granulatorinnenraum entlang einer ersten Längsseite begrenzt, eine zweite etwa vertikale bevorzugt nach oben leicht weg von der Mittellinie des Fließbettgranulators nach außen hin geneigte Granulatorseitenwand 1a.2, welche parallel und mit Abstand zu der ersten Granulatorseitenwand verläuft und den Granulatorinnenraum entlang seiner zweiten Längsseite begrenzt, eine bevorzugt etwa vertikale Granulatorvorderwand 1a.3, welche vorzugsweise in Querrichtung zur den beiden Granulatorseitenwänden verläuft und diese miteinander verbindet und eine bevorzugt etwa vertikale Granulatorrückwand 1a.4, welche mit Abstand und vorzugsweise parallel zu der Granulatorvorderwand verläuft und somit der Granulatorvorderwand gegenüberliegt. Somit weist der in dem Ausführungsbeispiel dargestellte Fließbettgranulator einen im Grundriss vorzugsweise rechteckigen Granulatorinnenraum auf, welcher gegebenenfalls auch quadratisch sein könnte. Zur Vereinfachung wird in der vorliegenden Anmeldung der Begriff "Längsseite" verwendet, welche der Erstreckung des Fließbettgranulators in Förderrichtung der Granulatpartikel im Granulatorinnenraum entspricht, die in den Figuren 1 und 2 durch den Pfeil angedeutet ist. Die Granulatorvorderwand 1a.3, die an der Seite liegt, an der die nicht der Spezifikation entsprechenden Granulatpartikel in den Granulatorinnenraum eintreten und die Granulatorrückwand 1a.4, die an der Seite liegt, an der bei einem herkömmlichen Fließbettgranulator die Granulatpartikel aus dem Granulatorinnenraum austreten, verlaufen somit in Querrichtung und quer zur Hauptförderrichtung der Granulatpartikel.

Nach unten hin ist der Granulatorinnenraum 1, in dem das Fließbett aus den Granulatpartikeln erzeugt wird, durch eine perforierte Platte 2 begrenzt, welche in der Regel horizontal verläuft und welche sich gemäß der Darstellung beispielsweise (aber nicht zwingend) über die gesamte Länge und über die gesamte Breite des Granulatorinnenraums 1 erstrecken kann. Oberhalb dieser perforierten Platte 2 wird somit in einem etwa quaderförmigen oder trogförmigen Volumen ein Fließbett aus Granulatpartikeln erzeugt. In, oberhalb oder auf der perforierten Platte sind mehrere, in der Regel jeweils voneinander beabstandet angeordnete Sprühdüsen 5 angebracht, die beispielsweise in Reihen angeordnet sein können. Die Sprühdüsen 5 sind mit nicht gezeigten Atomisierungsgaszuleitungen und Schmelzezuführungsleitungen verbunden. Weiterhin sind oberhalb der perforierten Platte 2 eine oder mehrere Saatguteingangsöffnung/-en 3 und in der perforierten Platte 2 eine oder mehrere Granulatausgangsöffnung/-en 4 vorgesehen, wobei die Strecke zwischen der Saatguteingangsöffnung 3 und der Granulatausgangsöffnung 4 eine (gedachte) Granulatfließrichtung (I) (siehe Pfeil) definieren. Die perforierte Platte 2 wird, nicht gezeigt, von unten mit dem Fluidisierungsmedium, beispielsweise Luft, beaufschlagt. Die Saatguteingangsöffnung 3 erlaubt die Einbringung von kleineren (kleiner als die gewünschte Granulatgröße) Granulatpartikeln als Saatgutpartikel in den Fließbettgranulator. In Fließrichtung gesehen umfasst der Granulatorinnenraum außerdem vorzugsweise eine oder mehrere Trennwände 7, die jeweils voneinander beabstandet sind und sich in Querrichtung des Granulators erstrecken. Die Saatguteingangsöffnungen 3 können an der Granulatorvorderwand 1a.3 und/oder an der ersten Granulatorseitenwand 1a.1 und/oder der zweiten Granulatorseitenwand 1a.2 in Granulatfließrichtung gesehen jeweils zwischen einer ersten und einer zweiten Trennwand 7 angeordnet sein.

Über die Sprühdüsen 5 und die nicht gezeigten Zuleitungen für die Schmelze 6a und für Atomisierungsluft 6b werden die Saatgutpartikel mit Schmelzetröpfchen beaufschlagt. Durch diese Beaufschlagung "accretion" wachsen die Saatgutpartikel kontinuierlich an. Bevorzugt erscheinen die Partikel auf mikroskopischer Ebene durch das Anwachsen "himbeerartig" aus einem Kern mit aufgeschmolzenen, erstarrten (kristallisierten) Tropfen. Die perforierte Platte 2 umfasst Wachstumszonen (2a, 2aᵢ, mit i = 1, 2, 3, ...) und Kühlzonen (2b, 2bᵢ, mit i = 1, 2, 3, ...). In den Wachstumszonen (2a, 2aᵢ, mit i = 1, 2, 3, ...) sind Sprühdüsen 5 angeordnet, in den Kühlzonen fehlen Sprühdüsen (2b, 2bᵢ, mit i = 1, 2, 3, ...) oder es sind gegebenenfalls (nicht gezeigt) weniger Sprühdüsen 5 vorhanden als in den Wachstumszonen (2a, 2aᵢ, mit i = 1, 2, 3, ...). Der Wechsel von Wachstumszonen (2a, 2aᵢ, mit i = 1, 2, 3, ...) und Kühlzonen (2b, 2bᵢ, mit i = 1, 2, 3, ...) ermöglicht eine Steuerung des Partikelwachstums und der Temperaturverteilung. Dies ist insbesondere zur Vermeidung der Bildung von Biuret bei hohen Temperaturen nützlich. Weiterhin sind in Fließrichtung gesehen zwischen den Wachstumszonen 2a und Kühlzonen 2b Trennwände 7 angeordnet, bevorzugt umfassen die Trennwände nicht gezeigte Durchlassöffnungen. Dies können beispielsweise Schlitze im Bereich der Unterseite der Trennwände 7 sein, die beispielsweise dadurch gegeben sind, dass die Trennwände 7 oberhalb der perforierten Platte 2 enden und dadurch Durchlassöffnungen für die Granulatpartikel in Fließrichtung von einer Zone zur nächsten vorhanden sind.

Figur 2 zeigt eine schematische Draufsicht eines erfindungsgemäßen Fließbettgranulators. Der grundsätzliche Aufbau entspricht dem zuvor anhand von Figur 1 beschriebenen Aufbau eines herkömmlichen Fließbettgranulators und die zuvor bereits beschriebenen Merkmale werden daher hier nicht wiederholt. Durch Vergleich der beiden Figuren 1 und 2 erkennt man, dass bei dem erfindungsgemäßen Fließbettgranulator die Granulataustragsöffnung mit Abstand vor der Granulatorrückwand 1a.4 angeordnet ist. Somit ist die gedachte kürzeste Entfernung zwischen der Granulataustragsöffnung 4 und der Saatguteingangsöffnung 3 und der Granulatorvorderwand 1a.3 bei gleicher Baugröße des Fließbettgranulators bei der erfindungsgemäßen Lösung kürzer als bei dem herkömmlichen Fließbettgranulator gemäß Figur 1, da sich bei letzterem die Granulataustragsöffnung 4 im Bereich der Granulatorrückwand 1a.4 befindet und somit von der Saatguteingangsöffnung 3 aus gesehen quasi am in Längsrichtung gesehen gegenüberliegenden Ende des Fließbettgranulators liegt.

Weiterhin ist die Granulatausgangsöffnung 4 innerhalb der perforierten Platte 2 angeordnet und berührt dabei die Granulatorrückwand 1a.4 nicht. Die dort abgeführten Granulatpartikel fallen dann durch die Granulatausgangsöffnung in der perforierten Platte 2 nach unten hin, beispielsweise durch einen entsprechenden Schacht. Anschließend werden in an sich bekannter Weise über Fördereinrichtungen und Siebe die verschiedenen Granulatpartikelgrößen voneinander getrennt und Granulatpartikel, welche nicht der geforderten Spezifikation entsprechen, werden zu der Saatguteingangsöffnung 3 zurückgeführt. Diese Details sind in Figur 2 nicht dargestellt.

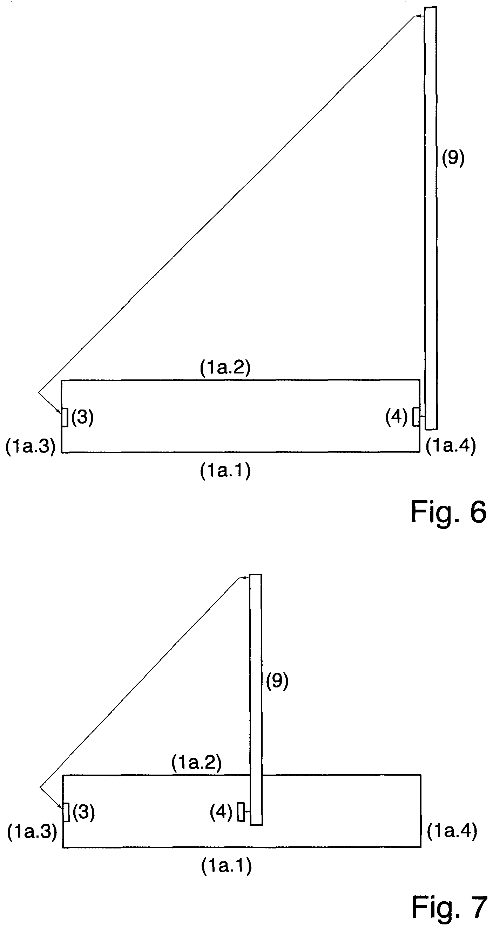

Die Granulatausgangsöffnung 4 ist in der erfindungsgemäßen Ausgestaltung von mehreren Umlenkplatten 8, 8.1, 8.2, 8.3 beispielsweise etwa U-förmig umgeben, wobei an der gegenüber der Granulatorrückwand 1a.4 liegenden Seite entweder keine Umlenkplatte 8 oder (nicht gezeigt) eine Umlenkplatte 8 mit einer Öffnung vorgesehen ist. Die Umlenkplatten 8, 8.1, 8.2, 8.3 bewirken dabei ein Umfließen mit anschließendem Umlenken der im Fließbett befindlichen Granulatpartikel zuerst an der Granulatausgangsöffnung 4 vorbei und anschließend mit umgekehrter Fließrichtung innerhalb der Umlenkplatten 8, 8.1, 8.2, 8.3 in die Granulatausgangsöffnung 4. Damit reduziert sich der Abstand zwischen Granulataustrag (Granulatausgangsöffnung 4) und Rücklauf-/Saatguteintritt (Saatguteingangsöffnung 3) des Fließbettgranulators beispielsweise um ca. 20 - 50%. Durch die verlagerte Granulatausgangsöffnung 4 verringert sich die durch die Fördereinrichtung zu überwindende Höhe sowie die Gebäudehöhe des Granulationsgebäudes entsprechend, da die Rückführung der nicht der Spezifikation entsprechenden Granulatpartikel zur Saatguteingangsöffnung 3 in einem Bereich oberhalb des Fließbettgranulators erfolgt und sich die Bauhöhe der dafür erforderlichen Vorrichtungen bei der erfindungsgemäßen Lösung verringert. Dieser Aspekt wird noch später anhand der schematischen Darstellungen der Figuren 6 und 7 näher erläutert.

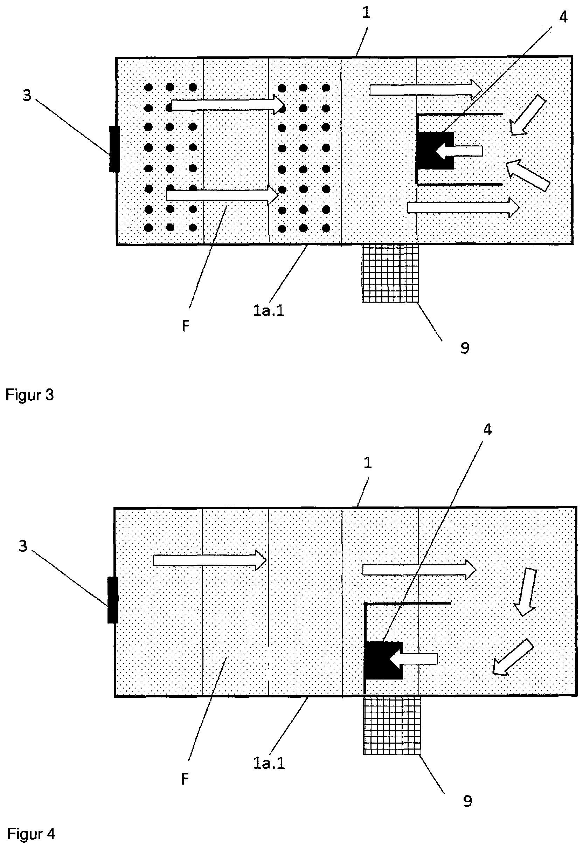

Figur 3 zeigt eine weitere schematische Draufsicht eines erfindungsgemäßen Fließbettgranulators. Der grundsätzliche Aufbau entspricht dem in Figur 2 beschriebenen Aufbau. An der ersten Granulatorseitenwand 1a.1 ist eine Fördereinrichtung 9 angeordnet. Die Fördereinrichtung 9 kann alternativ an der zweiten Granulatorseitenwand 1a.2 angeordnet sein. Als weitere Alternative kann an den beiden Granulatorseitenwänden 1a.1, 1a.2 jeweils eine Fördereinrichtung angeordnet sein. Die Fließrichtung F der Granulatpartikel ist durch die Pfeile in der Figur 3 schematisch angedeutet. In Gegensatz zu Fließbettgranulatoren nach dem Stand der Technik erlaubt dies wie voranstehend beschrieben eine deutlich kompaktere Bauweise, insbesondere in Bezug auf die Gebäudehöhe des Granulationsgebäudes.

Figur 4 zeigt eine weitere schematische Draufsicht einer alternativen Ausgestaltung des erfindungsgemäßen Fließbettgranulators. Der grundsätzliche Aufbau entspricht dem in Figur 3 beschriebenen Aufbau. Die Granulatausgangsöffnung 4 ist jedoch benachbart zur ersten Granulatorseitenwand 1a.1 und der Fördereinrichtung 9 innerhalb der perforierten Platte 2 angeordnet. Diese Anordnung verringert den Transportweg zur Fördereinrichtung 9 Alternativ können eine Fördereinrichtung und eine Granulatausgangsöffnung 4 benachbart zur zweiten Granulatorseitenwand 1a.2 angeordnet sein. Eine weitere alternative Ausgestaltung sind zwei Granulatausgangsöffnungen mit jeweils einer Fördereinrichtung, angeordnet jeweils benachbart zur ersten Granulatorseitenwand 1a.1 und zur zweiten Granulatorseitenwand 1a.2.

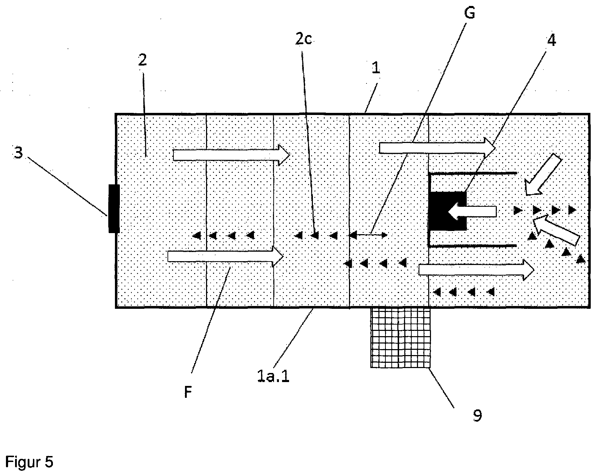

Figur 5 zeigt eine weitere bevorzugte schematische Draufsicht des erfindungsgemäßen Fließbettgranulators. Auf der perforierten Platte 2 sind im Vergleich zur realen Größe stark vergrößerte, schematische geneigte Öffnungen 2c angedeutet. Auf der verbauten perforierten Platte sind die Öffnungen beispielsweise 1 mm bis 3 mm groß. Aus Gründen der Übersichtlichkeit sind nur einzelne geneigte Öffnungen 2c angedeutet. Die Fließrichtung der Luft G bzw. des Fluidisierungsmediums ist beispielhaft durch den schwarzen Pfeil angedeutet. Die Anordnung der geneigten Öffnungen 2c lenken unterstützend die Fließrichtung F der Granulatpartikel.

Nachfolgend wird unter Bezugnahme auf die schematischen Seitenansichten gemäß den Figuren 6 und 7 ein wesentlicher Vorteil der erfindungsgemäßen Bauform des Fließbettgranulators erläutert. Man erkennt in beiden Darstellungen jeweils die Granulatorvorderwand 1a.3 und die Granulatorrückwand 1a.4 zwischen denen die an der Saatguteingangsöffnung 3 in den Granulatorinnenraum 1 eintretenden Granulatpartikel in Fließrichtung (Längsrichtung) zur Granulatausgangsöffnung 4 hin gefördert werden. Weil bei der herkömmlichen Vorrichtung gemäß Figur 6 diese Granulatausgangsöffnung 4 am Ende des Granulatorinnenraums 1 liegt, müssen die Granulatpartikel die gesamte Strecke durch den Granulatorinnenraum zurücklegen, bevor sie zu der Granulatausgangsöffnung 4 gelangen. Folglich ist dort die schematisch stark vereinfachte Fördereinrichtung 9 angeordnet, die eine entsprechende Bauhöhe aufweisen muss, um die nicht der Spezifikation entsprechenden Granulatpartikel über die oberhalb des Fließbettgranulators angeordneten Siebe als Saatgut wieder zur Saatguteingangsöffnung 3 zurückführen zu können.

Bei der erfindungsgemäßen Lösung liegt hingegen die Granulatausgangsöffnung 4 und damit auch die von dieser ausgehende Fördereinrichtung 9 in einem eher mittleren Bereich der Granulatorseitenwand, mit erheblichem Abstand zur Granulatorrückwand 1a.4, so dass die Strecke, über die die nicht der Spezifikation entsprechenden Granulatpartikel zur Granulatorvorderwand 1a.3 und der (den) dort angeordneten Saatguteingangsöffnungen 3 zurück geführt werden muss, erheblich kürzer ist und entsprechend auch die Bauhöhe der Fördereinrichtung 9 und des Granulationsgebäudes wesentlich reduziert werden kann.

### Bezugszeichenliste

- 1: Granulatorinnenraum
- 1a: Granulatorinnenraumwände
- 1a.1: erste Granulatorseitenwand
- 1a.2: zweite Granulatorseitenwand
- 1a.3: Granulatorvorderwand
- 1a.4: Granulatorrückwand
- 2: Perforierte Platte
- 2aᵢ: Wachstumszone
- 2bᵢ: Kühlzone
- 2c: geneigten Öffnungen
- 3: Saatguteingangsöffnung(-en)
- 4: Granulatausgangsöffnung(-en)
- 5: Sprühdüsen
- 6a: Zuleitungen für Schmelze
- 6b: Zuleitungen für Atomisierungsgas
- 7: Trennwände
- 8ᵢ: Umlenkeinrichtung/Umlenkplatten
- 9: Fördereinrichtung
- F: Fließrichtung der Granulatpartikel
- G: Fließrichtung der Luft oder des Fluidisierungsmediums

## Patentansprüche

1. Fließbettgranulator zur Herstellung harnstoffhaltiger oder nitrathaltiger Granulate, mindestens umfassend:
- einen Granulatorinnenraum (1) mit Granulatorinnenraumwänden (1a), mindestens umfassend eine erste Granulatorseitenwand (1a.1), eine zweite Granulatorseitenwand (1a.2), eine in Querrichtung zu den Granulatorseitenwänden verlaufende Granulatorvorderwand (1a.3) und eine ebenfalls in Querrichtung verlaufende Granulatorrückwand (1a.4) an dem der Granulatorvorderwand gegenüberliegenden Ende des Granulatorinnenraums (1);
- eine den Granulatorinnenraum (1) nach unten hin begrenzende horizontal angeordnete perforierte Platte (2);
- mindestens eine Saatguteingangsöffnung (3) und mindestens eine Granulatausgangsöffnung (4);
**dadurch gekennzeichnet, dass**
- mindestens eine Granulatausgangsöffnung (4) mit Abstand vor der Granulatorrückwand (1a.4) angeordnet ist, wobei
im Granulatorinnerraum (1) wenigstens eine Umlenkeinrichtung (8, 8.1, 8.2, 8.3) vorgesehen ist, die eine Strömungsumlenkung der Granulatpartikel im Granulatorinnenraum (1) in der Weise bewirkt, dass die Granulatpartikel wenigstens einfach in einer Richtung abweichend von ihrer anfänglichen Fließrichtung zur Granulatausgangsöffnung (4) hin umgelenkt werden, und
die Umlenkeinrichtung wenigstens zwei Umlenkplatten (8, 8.1, 8.1+i mit i = 0, 1, 2, 3, ...) umfasst, von denen sich eine erste Umlenkplatte gegebenenfalls mit Abstand neben der Granulatausgangsöffnung (4) etwa in Fließrichtung der Granulatpartikel erstreckt und eine zweite Umlenkplatte sich vor der Granulatausgangsöffnung (4) etwa quer zur Fließrichtung der Granulatpartikel erstreckt.

2. Fließbettgranulator nach Anspruch 1, **dadurch gekennzeichnet, dass** mindestens eine Granulatausgangsöffnung (4) innerhalb der perforierten Platte (2) angeordnet ist.

3. Fließbettgranulator nach Anspruch 1 oder 2, **dadurch gekennzeichnet, dass** die wenigstens eine Umlenkeinrichtung (8, 8.1, 8.2, 8.3) eine mehrfache Strömungsumlenkung der Granulatpartikel im Granulatorinnenraum (1) abweichend von ihrer anfänglichen Fließrichtung zur Granulatausgangsöffnung (4) hin bewirkt.

4. Fließbettgranulator nach einem der Ansprüche 1 bis 3, **dadurch gekennzeichnet, dass** die wenigstens eine Umlenkeinrichtung (8, 8.1, 8.2, 8.3) eine Strömungsumlenkung der Granulatpartikel im Granulatorinnenraum (1) um insgesamt etwa 180° abweichend von ihrer anfänglichen Fließrichtung zur Granulatausgangsöffnung (4) hin bewirkt.

5. Fließbettgranulator nach einem der Ansprüche 1 bis 4, **dadurch gekennzeichnet, dass** wenigstens eine Umlenkplatte (8, 8.1, 8.1+i mit i = 0, 1, 2, 3, ...) der Umlenkeinrichtung sich etwa in Fließrichtung der Granulatpartikel oder in einem spitzen Winkel zur Fließrichtung der Granulatpartikel erstreckt und mit Abstand zu den Granulatorseitenwänden (1a.1, 1a.2) angeordnet ist.

6. Fließbettgranulator nach einem der Ansprüche 1 bis 5, **dadurch gekennzeichnet, dass** wenigstens zwei Umlenkplatten (8, 8.1, 8.1+i mit i = 0, 1, 2, 3, ...) der Umlenkeinrichtung miteinander einen spitzen Winkel oder einen rechten Winkel einnehmen oder zueinander parallel angeordnet sind.

7. Fließbettgranulator nach einem der Ansprüche 1 bis 6, **dadurch gekennzeichnet, dass** der Granulatorinnenraum (1) oberhalb der perforierte Platte (2) vorzugsweise durch in Querrichtung verlaufende Trennwände (7) in Fließrichtung gesehen in Wachstumszonen (2a) und Kühlzonen (2b) unterteilt ist.

8. Fließbettgranulator nach einem der Ansprüche 1 bis 7, **dadurch gekennzeichnet, dass** eine zweite Saatguteingangsöffnung an der Granulatorvorderwand (1a.3) und/oder zusätzlich weitere Saatguteingangsöffnungen an der ersten Granulatorseitenwand (1a.1) und/oder der zweiten Granulatorseitenwand (1a.2) angeordnet sind.

9. Fließbettgranulator nach Anspruch 8, **dadurch gekennzeichnet, dass** die weiteren zusätzlichen Saatguteingangsöffnungen gemäß Anspruch 8 in Verbindung mit einer Wachstumszone (2a₂, 2a₃, usw.) angeordnet sind.

10. Fließbettgranulator nach einem der vorangehenden Ansprüche, **dadurch gekennzeichnet, dass** die Granulatausgangsöffnung (4) innerhalb der perforierte Platte (2) angeordnet ist und die Granulatorrückwand (1a.4) nicht berührt.

11. Fließbettgranulator nach einem der vorangehenden Ansprüche, **dadurch gekennzeichnet, dass** die Umlenkplatten (8.1, 8.1+i mit i = 0, 1, 2, 3, ...) U-förmig oder ummantelnd um die Granulatausgangsöffnung (4) angeordnet sind.

12. Fließbettgranulator nach einem der Ansprüche 7 bis 11, **dadurch gekennzeichnet, dass** die zwischen den Wachstumszonen (2a) und Kühlzonen (2b) angeordneten Trennwände (7) Durchlassöffnungen umfassen.

13. Fließbettgranulator nach Anspruch 5, **dadurch gekennzeichnet, dass** wenigstens eine Umlenkplatte (8) als ein Teil einer Trennwand (7) ausgeführt ist.

14. Fließbettgranulator nach einem der vorangehenden Ansprüche, **dadurch gekennzeichnet, dass** die Granulatausgangsöffnung (4) innerhalb einer Kühlzone (2bᵢ) angeordnet ist.

15. Fließbettgranulator nach einem der vorangehenden Ansprüche, **dadurch gekennzeichnet, dass** die perforierte Platten geneigte Öffnungen (2c) aufweisen, wobei die geneigten Öffnungen (2c) bevorzugt einen Winkel von 20 ° bis 60 ° zur Oberfläche der perforierten Platte (2) auf.

16. Fließbettgranulator nach Anspruch 15, **dadurch gekennzeichnet, dass** die geneigten Öffnungen (2c) in unterschiedliche Richtungen geneigt sind, bevorzugt entlang einer Fließrichtung der Granulatpartikel, besonders bevorzugt entlang der Fließrichtung der Granulatpartikel um die Umlenkplatten (8) in Richtung der Granulatausgangsöffnung (4).

17. Fließbettgranulator nach einem der vorherigen Ansprüche, **dadurch gekennzeichnet, dass** eine oder beide Granulatorseitenwände (1a.1 und 1a.2) vertikal angeordnet sind.

18. Fließbettgranulator nach einem der vorherigen Ansprüche, **dadurch gekennzeichnet, dass** eine oder beide Granulatorseitenwände (1a.1 und 1a.2) in vertikaler Richtung gesehen von der Mittellinie des Fließbettgranulators nach außen hin geneigt angeordnet sind.

19. Granulationsanlage mit einem Fließbettgranulator nach einem der vorangehenden Ansprüche, **dadurch gekennzeichnet, dass** die Granulatausgangsöffnung (4), bevorzugt über ein Grobsieb, mit einer Fördereinrichtung (9) verbunden ist.

20. Granulationsanlage nach Anspruch 19, **dadurch gekennzeichnet, dass** die Fördereinrichtung (9) mit einer nachgelagerten Siebvorrichtung (10) verbunden ist.

21. Granulationsanlage nach einem der Ansprüche 19 oder 20, **dadurch gekennzeichnet, dass** die Fördereinrichtung (9) in Fließrichtung der Granulatpartikel in einem Abstand von 20 % bis 80 % der Gesamtlänge der ersten Granulatorseitenwand (1a.1) oder der zweiten Granulatorseitenwand (1a.2), bevorzugt zur Außenkante der ersten Granulatorseitenwand (1a.1) oder der zweiten Granulatorseitenwand (1a.2) angeordnet ist.

22. Granulationsanlage nach einem der Ansprüche 19 bis 21, **dadurch gekennzeichnet, dass** die Granulatausgangsöffnung (4) zunächst mit einem Grobsieb gefolgt von einem separaten Fließbettkühler verbunden ist oder mit keinem separaten Fließbettkühler verbunden ist.

23. Verfahren zur Herstellung eines harnstoffhaltigen oder nitrathaltigen Granulates mindestens umfassend die folgenden Schritte:
- Bereitstellen einer harnstoffhaltigen und/oder nitrathaltigen Schmelze;
- Einsprühen der harnstoffhaltigen und/oder nitrathaltigen Schmelze in einen Fließbettgranulator nach einem der Ansprüche 1 bis 18; und
- Granulieren der harnstoffhaltigen oder nitrathaltigen Schmelze und erhalten eines harnstoffhaltigen und/oder nitrathaltigen Granulates.

24. Verfahren nach Anspruch 23, **dadurch gekennzeichnet, dass** die harnstoffhaltige und/oder nitrathaltige Schmelze eine oder mehrere Substanzen ausgewählt aus der Gruppe umfassend Ammoniumsulfat, elementaren Schwefel, Ammoniumnitrat, Spurenelemente, Granulierungsadditive, Emulgierungsadditive und oder Gemische davon enthält.

25. Verwendung eines Fließbettgranulators nach einem der Ansprüche 1 bis 18 zur Herstellung eines harnstoffhaltigen und/oder nitrathaltigen Granulates, bevorzugt einem elementaren Schwefel und/oder Ammoniumsulfat enthaltenden harnstoffhaltigen Granulates.

## Claims

1. Fluidized bed granulator for production of urea-containing or nitrate-containing granulates, comprising at least:
- a granulator interior (1) having granulator interior walls (1a), at least comprising a first granulator side wall (1a.1), a second granulator side wall (1a.2), a granulator front wall (1a.3) extending transversely to the granulator side walls, and a granulator back wall (1a.4) also extending transversely at an opposite end of the granulator interior (1) from the granulator front wall;
- a horizontally arranged perforated plate (2) delimiting the granulator interior (1) toward the bottom;
- at least one seed entry opening (3) and at least one granulate exit opening (4); **characterized in that**
- at least one granulate exit opening (4) is arranged at a distance in front of the granulator back wall (1a.4), wherein
at least one deflection device (8, 8.1, 8.2, 8.3) is provided in the granulator interior (1), which causes a deflection of the flow of the granulate particles in the granulator interior (1) in such a way that the granulate particles are deflected at least once in a direction deviating from their initial flow direction towards the granulate exit opening (4), and
the deflection device comprises at least two deflection plates (8, 8.1, 8.1+i with i = 0, 1, 2, 3, ...), of which a first deflection plate extends, if necessary at a distance, next to the granulate exit opening (4) generally in the flow direction of the granulate particles, and a second deflection plate extends in front of the granulate exit opening (4) approximately transversely to the flow direction of the granulate particles.

2. Fluidized bed granulator according to claim 1, **characterized in that** at least one granulate exit opening (4) is arranged within the perforated plate (2).

3. Fluidized bed granulator according to claim 1 or 2, **characterized in that** the at least one deflection device (8, 8.1, 8.2, 8.3) causes a multiple deflection of the flow of the granulate particles in the granulator interior (1) that is different from their initial flow direction toward the granulate exit opening (4).

4. Fluidized bed granulator according to one of claims 1 to 3, **characterized in that** the at least one deflection device (8, 8.1, 8.2, 8.3) causes a deflection of the flow of the granulate particles in the granulator interior (1) by a total of approximately 180° deviating from their initial flow direction towards the granulate exit opening (4).

5. Fluidized bed granulator according to one of claims 1 to 4, **characterized in that** at least one deflection plate (8, 8.1, 8.1+i with i = 0, 1, 2, 3, ...) of the deflection device extends generally in the flow direction of the granulate particles or at an acute angle to the flow direction of the granulate particles and is arranged at a distance from the granulator side walls (1a.1, 1a.2).

6. Fluidized bed granulator according to one of claims 1 to 5, **characterized in that** at least two deflection plates (8, 8.1, 8.1+i with i = 0, 1, 2, 3, ...) of the deflection device form an acute angle or a right angle with each other or are arranged parallel to each other.

7. Fluidized bed granulator according to one of claims 1 to 6, **characterized in that** the granulator interior (1) above the perforated plate (2) is divided, preferably by partition walls (7) extending in the transverse direction, into growth zones (2a) and cooling zones (2b) as viewed in the flow direction.

8. Fluidized bed granulator according to one of claims 1 to 7, **characterized in that** a second seed entry opening is arranged in the granulator front wall (1a.3) and/or additional seed entry openings are arranged in the first side wall (1a.1) and/or the second side wall (1a.2) of the granulator.

9. Fluidized bed granulator according to claim 8, **characterized in that** the further additional seed entry openings according to claim 8 are arranged in connection with a growth zone (2a₂, 2a₃, etc.).

10. Fluidized bed granulator according to one of the preceding claims, **characterized in that** the granulate exit opening (4) is arranged within the perforated plate (2) and does not touch the granulator back wall (1a.4).

11. Fluidized bed granulator according to one of the preceding claims, **characterized in that** the deflection plates (8.1, 8.1+i with i = 0, 1, 2, 3, ...) are arranged in a U-shape or such that they ensheath the granulate exit opening (4).

12. Fluidized bed granulator according to one of claims 7 to 11, **characterized in that** the partition walls (7) arranged between the growth zones (2a) and cooling zones (2b) have passage openings.

13. Fluidized bed granulator according to claim 5, **characterized in that** at least one deflection plate (8) is designed as portion of a partition wall (7).

14. Fluidized bed granulator according to one of the preceding claims, **characterized in that** the granulate exit opening (4) is arranged within a cooling zone (2bᵢ₎.

15. Fluidized bed granulator according to one of the preceding claims, **characterized in that** the perforated plates have inclined openings (2c), wherein the inclined openings (2c) preferably form an angle of 20° to 60° to the surface of the perforated plate (2).

16. Fluidized bed granulator according to claim 15, **characterized in that** the inclined openings (2c) are inclined in different directions, preferably along a flow direction of the granulate particles, particularly preferably along the flow direction of the granulate particles around the deflection plates (8) in the direction of the granulate exit opening (4).

17. Fluidized bed granulator according to one of the preceding claims, **characterized in that** one or both of the granulator side walls (1a.1 and 1a.2) are arranged vertically.

18. Fluidized bed granulator according to one of the preceding claims, **characterized in that** one or both of the granulator side walls (1a.1 and 1a.2), as viewed in a vertical direction, are arranged in an inclined manner from the center line of the fluidized bed granulator outward.

19. Granulation plant with a fluidized bed granulator according to one of the preceding claims, **characterized in that** the granulate exit opening (4) is connected to a conveying device (9), preferably via a coarse screen.

20. Granulation plant according to claim 19, **characterized in that** the conveying device (9) is connected to a downstream screening device (10).

21. Granulation plant according to one of claims 19 or 20, **characterized in that** the conveying device (9) is arranged in the flow direction of the granulate particles at a distance of 20% to 80% of the total length of the first granulator side wall (1a.1) or the second granulator side wall (1a.2), preferably with respect to the outer edge of the first granulator side wall (1a.1) or the second granulator side wall (1a.2).

22. Granulation plant according to one of claims 19 to 21, **characterized in that** the granulate exit opening (4) is connected first to a coarse screen followed by a separate fluidized bed cooler or is connected to no separate fluidized bed cooler.

23. Process for production of a urea-containing or nitrate-containing granulate, comprising at least the following steps:
- providing a urea-containing and/or nitrate-containing melt;
- spraying the urea-containing and/or nitrate-containing melt into a fluidized bed granulator according to one of claims 1 to 18; and
- granulating the urea-containing or nitrate-containing melt and obtaining a urea-containing and/or nitrate-containing granulate.

24. Process according to claim 23, **characterized in that** the urea-containing and/or nitrate-containing melt contains one or more substances selected from the group comprising ammonium sulfate, elemental sulfur, ammonium nitrate, trace elements, granulation additives, emulsification additives, and/or mixtures thereof.

25. Use of a fluidized bed granulator according to one of claims 1 to 18 for production of a urea-containing and/or nitrate-containing granulate, preferably a urea-containing granulate containing elemental sulfur and/or ammonium sulfate.

## Revendications

1. Granulateur à lit fluidisé pour la production de granulat contenant de l'urée ou du nitrate, comprenant au moins :
- un intérieur de granulateur (1) avec des parois intérieures de granulateur (1a), comprenant au moins une première paroi latérale de granulateur (1a.1), une deuxième paroi latérale de granulateur (1a.2), une paroi avant de granulateur (1a.3) s'étendant transversalement aux parois latérales du granulateur, et une paroi arrière de granulateur (1a.4) s'étendant également transversalement à l'extrémité de l'intérieur du granulateur (1) opposée à la paroi avant du granulateur ;
- une plaque perforée (2) disposée horizontalement délimitant l'intérieur du granulateur (1) vers le fond ;
- au moins une ouverture d'entrée de semence (3) et au moins une ouverture de sortie de granulat (4) ;
**caractérisé en ce que**
- au moins une ouverture de sortie de granulat (4) est disposée à distance devant la paroi arrière (1a.4) du granulateur, dans lequel
au moins un dispositif de déviation (8, 8.1, 8.2, 8.3) est prévu à l'intérieur du granulateur (1), lequel provoque une déviation du flux des particules de granulat à l'intérieur du granulateur (1) de telle sorte que les particules de granulat sont déviées au moins une fois dans une direction s'écartant de leur direction d'écoulement initiale vers l'ouverture de sortie des granulat (4), et
le dispositif de déviation comprend au moins deux plaques de déviation (8, 8.1, 8.1+i avec i = 0, 1, 2, 3, ...) sont prévues, dont une première plaque de déviation s'étend, si nécessaire à distance, à côté de l'ouverture de sortie de granulat (4) approximativement dans la direction d'écoulement des particules de granulat, et une deuxième plaque de déviation s'étend devant l'ouverture de sortie de granulat (4) approximativement transversalement à la direction d'écoulement des particules de granulat.

2. Granulateur à lit fluidisé selon la revendication 1, **caractérisé en ce qu'**au moins une ouverture de sortie de granulat (4) est disposée à l'intérieur de la plaque perforée (2).

3. Granulateur à lit fluidisé selon la revendication 1 ou 2, **caractérisé en ce que** le au moins un dispositif de déviation (8, 8.1, 8.2, 8.3) provoque une déviation multiple du flux des particules de granulat à l'intérieur du granulateur (1) loin de leur direction d'écoulement initiale vers l'ouverture de sortie du granulat (4).

4. Granulateur à lit fluidisé selon l'une des revendications 1 à 3, **caractérisé en ce que** le au moins un dispositif de déviation (8, 8.1, 8.2, 8.3) provoque une déviation du flux des particules de granulat à l'intérieur du granulateur (1) d'environ 180° au total, s'écartant de leur direction d'écoulement initiale vers l'ouverture de sortie du granulat (4).

5. Granulateur à lit fluidisé selon l'une des revendications 1 à 4, **caractérisé en ce qu'**au moins une plaque de déviation (8, 8.1, 8.1+i avec i = 0, 1, 2, 3, ...) du dispositif de déviation s'étend approximativement dans la direction d'écoulement des particules de granulat ou selon un angle aigu par rapport à la direction d'écoulement des particules de granulat et est disposée à distance des parois latérales (1a.1, 1a.2) du granulateur.

6. Granulateur à lit fluidisé selon l'une des revendications 1 à 5, **caractérisé en ce qu'**au moins deux plaques de déviation (8, 8.1, 8.1+i avec i = 0, 1, 2, 3, ...) du dispositif de déviation forment un angle aigu ou un angle droit entre elles ou sont disposées parallèlement les unes aux autres.

7. Granulateur à lit fluidisé selon l'une des revendications 1 à 6, **caractérisé en ce que** l'intérieur du granulateur (1) au-dessus de la plaque perforée (2) est divisé, de préférence par des cloisons (7) s'étendant dans le sens transversal, en zones de croissance (2a) et zones de refroidissement (2b) dans le sens de l'écoulement.

8. Granulateur à lit fluidisé selon l'une des revendications 1 à 7, **caractérisé en ce qu'**une deuxième ouverture d'entrée de semences est disposée sur la paroi avant (1a.3) du granulateur et/ou des ouvertures d'entrée de semences supplémentaires sont disposées sur la première paroi latérale (1a.1) et/ou la deuxième paroi latérale (1a.2) du granulateur.

9. Granulateur à lit fluidisé selon la revendication 8, **caractérisé en ce que** les ouvertures d'entrée de semences supplémentaires additionnelles selon la revendication 8 sont disposées en liaison avec une zone de croissance (2a₂, 2a₃, etc.).

10. Granulateur à lit fluidisé selon l'une des revendications précédentes, **caractérisé en ce que** l'ouverture de sortie des granulat (4) est disposée à l'intérieur de la plaque perforée (2) et ne touche pas la paroi arrière du granulateur (1a.4).

11. Granulateur à lit fluidisé selon l'une des revendications précédentes, **caractérisé en ce que** les plaques déflectrices (8.1, 8.1+i avec i = 0, 1, 2, 3, ...) sont disposées en forme de U ou entourent l'ouverture de sortie du granulat (4).

12. Granulateur à lit fluidisé selon l'une des revendications 7 à 11, **caractérisé en ce que** les parois de séparation (7) disposées entre les zones de croissance (2a) et les zones de refroidissement (2b) comprennent des ouvertures de passage.

13. Granulateur à lit fluidisé selon la revendication 5, **caractérisé en ce qu'**au moins une plaque de déviation (8) est conçue comme partie intégrante d'une paroi de séparation (7).

14. Granulateur à lit fluidisé selon l'une des revendications précédentes, **caractérisé en ce que** l'ouverture de sortie des granulat (4) est disposée dans une zone de refroidissement (2bᵢ₎.

15. Granulateur à lit fluidisé selon l'une des revendications précédentes, **caractérisé en ce que** les plaques perforées ont des ouvertures inclinées (2c), les ouvertures inclinées (2c) formant de préférence un angle de 20° à 60° par rapport à la surface de la plaque perforée (2).

16. Granulateur à lit fluidisé selon la revendication 15, **caractérisé en ce que** les ouvertures inclinées (2c) sont inclinées dans différentes directions, de préférence le long d'une direction d'écoulement des particules de granulat, de manière particulièrement préférée le long de la direction d'écoulement des particules de granulat autour des plaques de déviation (8) dans la direction de l'ouverture de sortie de granulat (4).

17. Granulateur à lit fluidisé selon l'une des revendications précédentes, **caractérisé en ce qu'**une ou les deux parois latérales du granulateur (1a.1 et 1a.2) sont disposées verticalement.

18. Granulateur à lit fluidisé selon l'une des revendications précédentes, **caractérisé en ce que** l'une ou les deux parois latérales du granulateur (1a.1 et 1a.2) sont inclinées vers l'extérieur dans le sens vertical, vu depuis la ligne centrale du granulateur à lit fluidisé.

19. Installation de granulation avec un granulateur à lit fluidisé selon l'une des revendications précédentes, **caractérisée en ce que** l'ouverture de sortie du granulat (4) est reliée à un dispositif de transport (9), de préférence via un tamis grossier.

20. Installation de granulation selon la revendication 19, **caractérisée en ce que** le dispositif de transport (9) est relié à un dispositif de criblage (10) situé en aval.

21. Installation de granulation selon l'une des revendications 19 ou 20, **caractérisée en ce que** le dispositif de transport (9) est disposé dans le sens d'écoulement des particules de granulat à une distance comprise entre 20 % et 80 % de la longueur totale de la première paroi latérale (1a.1) ou de la deuxième paroi latérale (1a.2) du granulateur (1 a.2), de préférence à une distance comprise entre 20 % et 80 % de la longueur totale de la première paroi latérale (1a.1) ou de la deuxième paroi latérale (1a.2) du granulateur.

22. Installation de granulation selon l'une des revendications 19 à 21, **caractérisée en ce que** l'ouverture de sortie des granulat (4) est d'abord reliée à un tamis grossier suivi d'un refroidisseur à lit fluidisé séparé ou n'est pas reliée à un refroidisseur à lit fluidisé séparé.

23. Procédé de fabrication d'un granulat contenant de l'urée ou du nitrate, comprenant au moins les étapes suivantes :
- fournir une masse fondue contenant de l'urée et/ou du nitrate ;
- pulvériser la masse fondue contenant de l'urée et/ou du nitrate dans un granulateur à lit fluidisé selon l'une des revendications 1 à 18 ; et
- granuler la masse fondue contenant de l'urée ou du nitrate et obtenir un granulat contenant de l'urée et/ou du nitrate.

24. Procédé selon la revendication 23, **caractérisé en ce que** la masse fondue contenant de l'urée et/ou du nitrate contient une ou plusieurs substances choisies dans le groupe comprenant le sulfate d'ammonium, le soufre élémentaire, le nitrate d'ammonium, des oligo-éléments, des additifs de granulation, des additifs d'émulsification et/ou des mélanges de ceux-ci.

25. Utilisation d'un granulateur à lit fluidisé selon l'une des revendications 1 à 18 pour la production d'un granulat contenant de l'urée et/ou du nitrate, de préférence un granulat contenant de l'urée, du soufre élémentaire et/ou du sulfate d'ammonium.
